(19) Europäisches Patentamt

European Patent Office

Office européen des brevets

(11) Veröffentlichungsnummer: **0 531 722 A2**

## (12) EUROPÄISCHE PATENTANMELDUNG

(21) Anmeldenummer: **92113560.4**

(22) Anmeldetag: **08.08.92**

(51) Int. Cl.5: **G01S 17/88**, G01S 17/10

(30) Priorität: **09.09.91 DE 4129912**

(43) Veröffentlichungstag der Anmeldung:
**17.03.93 Patentblatt 93/11**

(84) Benannte Vertragsstaaten:
**AT BE CH DE ES FR GB IT LI NL SE**

(71) Anmelder: **DORNIER LUFTFAHRT GMBH**
**Postfach 3**
**W-8031 Wessling/Oberpfaffenhofen(DE)**

(72) Erfinder: **Lux, Peter, Dr.**
**Untere Seestrasse 120**
**W-7994 Langenargen(DE)**

(74) Vertreter: **Kasseckert, Rainer**
**DORNIER GMBH Kleeweg 3**
**W-7990 Friedrichshafen 1 (DE)**

(54) **Verfahren und Vorrichtung zur Aufnahme von Entfernungsbildern.**

(57) Die Erfindung betrifft ein Verfahren zur Erzeugung von Entfernungsbildern durch Aussenden von Lichtpulsen und synchronisiertem, zeitverzögertem Empfang der reflektierten Lichtpulse auf einer Bildaufnahmeeinheit mit vorgeschalteter Verschlußeinrichtung, wobei während dem Empfang eines reflektierten Lichtpulses die Transparenz der Verschlußeinrichtung eine vorgegebene zeitabhängige Funktion durchläuft und in dieser Weise mindestens zwei solche modulierte Reflexionsbilder unter Anwendung unterschiedlicher Transparenzfunktionen erzeugt werden. Jedem dieser Bilder wird eine Farbe zugeordnet und die eingefärbten Bilder zu einem falschfarbkodierten Entfernungsbild überlagert.

Fig. 1

Die Erfindung betrifft ein Verfahren und Vorrichtung zur Aufnahme von Entfernungsbildern.

Ein Entfernungsbild ist die Abbildung eines Objekts, deren Bildpunkte nicht wie bei einem normalen Bild den Helligkeiten oder Farben der Objektpunkte entsprechen, sondern den jeweiligen Entfernungen der entsprechenden Objektpunkte.

Bekannt sind Verfahren zum zweidimensionalen Vermessen von Entfernungsinformationen in Form eines Entfernungsbildes (P.Levi, **Elektronik 12**, 1983, S. 93 - 98). Die bekannten Verfahren lassen sich in zwei Gruppen einteilen, die sich durch das physikalische Meßprinzip unterscheiden. In Laufzeitmessungen elektromagnetischer oder akustischer Wellen und in Triangulationsmethoden. Das erste Prinzip eignet sich für Meßbereiche von einem Meter bis unendlich und liefert Meßgenauigkeiten $\geq$ 1 mm, das zweite Prinzip wird aufgrund des Zusammenhangs von Meßbasis und Meßgenauigkeit hauptsächlich im Nahbereich $\leq$ 1 m eingesetzt.

Nachteilig an den bekannten Systemen mit Laufzeitmessung ist, daß generell jeweils die Entfernung von einem Meßpunkt zum Sensor vermessen wird; ein Bild wird durch Strahlablenkung, beispielsweise mit rotierendem oder oszillierendem Spiegel erzeugt. Ein derartiges System ist mechanisch und optisch aufwendig und entsprechend teuer.

Systeme, die nach dem Triangulationsprinzip arbeiten, gestatten unter bestimmten Bedingungen ein gleichzeitiges Messen mehrerer Entfernungsbildpunkte. Nachteilig ist jedoch, daß die Informationen mehrdeutig sein können, daß die Bildauswertung dann aufwendig ist und daß der Meßbereich auf kurze Entfernungen beschränkt bleibt.

Aus der **US-PS 41 99 253** ist eine Vorrichtung zum Aufnehmen von entfernungsbildern nach dem System der Laufzeitmessung bekannt. Dabei werden von einem Laser kurze Lichtpulse ausgesandt und das vom Objekt reflektierte Licht wird gesammelt. Aus den verschiedenen Laufzeiten wird das Gesamtbild erstellt. Der Rechenaufwand für die Auswertung ist relativ groß.

In der **DE-PS 34 04 396** wird ein Verfahren beschrieben, bei dem einzelne Entfernungsbereiche mit Hilfe eines gepulsten Lasers und eines synchron gesteuerten elektronischen Verschlusses (Bildverstärkerelement) abgebildet werden und nach Zwischenspeicherung zu einem Entfernungsbild zusammengestellt werden können. Nachteilig an diesem Verfahren ist, daß zur Erzeugung eines Entfernungsbildes mehrere Einzelbilder erzeugt, zwischengespeichert und verarbeitet werden müssen, bis daraus ein Entfernungsbild entsteht.

Aufgabe der Erfindung ist es, ein Verfahren zu schaffen, mit dem schnell und mit möglichst wenig Auswerteaufwand Entfernungsbilder erzeugt werden können.

Diese Aufgabe wird erfindungsgemäß gelöst von einem Verfahren nach Anspruch 1. Vorrichtungen zur Durchführung des Verfahrens sind Gegenstände von Unteransprüchen.

Bei Anwendung des erfindungsgemäßen Verfahrens kann bereits mit einem ausgesandten Lichtpuls und entsprechend synchron gesteuerten elektronischen Verschlüssen ein Entfernungsbild erzeugt werden. Das fertige Bild enthält die Entfernung des Objekts als Farbwert in Falschfarbkodierung und darüberhinaus dessen Reflektivität als Grauwert, so daß der Kontrast des Objekts in der Bildinformation enthalten ist. Das Bild ist also sowohl Entfernungs- wie auch Reflektivitätsbild.

Die reflektierte Energie der ausgesandten Lichtpulse wird synchronisiert und zeitverzögert auf eine Bildaufnahmeeinheit, auch als Video-Target bezeichnet, abgebildet. Der Bildaufnahmeeinheit ist ein bevorzugt elektronischer Verschluß vorgeschaltet, dessen Durchlässigkeit entsprechend einer gewünschten Zeitfunktion (Transparenzfunktion) gesteuert wird. Es entsteht ein Reflexionsbild des Abbildungsbereichs, wobei die Grauwerte der einzelnen Bildpunkte sich einerseits aus der Reflektivität der abgebildeten Objekte und andererseits aus dem zeitlichen Verlauf der Transparenzfunktion ergeben. Mindestens zwei solche zeitlich modulierten Reflexionsbilder sind notwendig, wobei diese jeweils unter Anwendung verschiedenen Transparenzfunktionen erzeugt worden sind. Diese Reflexionbilder können zeitlich parallel erzeugt werden, wobei nur ein Lichtpuls ausgesandt wird, aber entsprechend mehrere Empfangseinrichtungen (Verschluß und Bildaufnahmeeinheit) vorhanden sind. Möglich ist aber auch eine sequentielle Erzeugung unter Aussendung mehrerer Lichtpulse, wobei dann nur eine Empfangseinrichtung notwendig ist.

Im nächsten Verfahrensschritt erfolgt die Generierung des eigentlichen Entfernungsbildes aus der Überlagerung der einzelnen zeitmodulierten Reflexionsbilder: Dazu wird der Bildinformation (Grauwerte der einzelnen Bildpunkte) jeweils eines der modulierten Reflexionsbilder eine Farbe zugeordnet (Einfärben der Bilder). Die Überlagerung dieser Bilder ergibt ein Farbbild, wobei die aus der Überlagerung resultierenden Farbwerte der einzelnen Bildpunkte die Entfernungsinformation enthalten.

Der zur Durchführung des Verfahren verwendete Verschluß mit zeitlich veränderlicher Transparenz, der einer Bildaufnahmeeinheit vorgeschaltet ist, wird bevorzugt elektronisch realisiert in Form eines schnell schaltbaren Bildverstärkers (Channel Plates), dessen Verstärkungsfaktor entsprechend der gewünschten zeitlich veränderlichen Durchlässigkeit steuerbar ist.

Als Lichtquelle wird vorteilhaft ein Laser und als Bildaufnahmeeinheit bevorzugt ein Charge Coupled Device (CCD) , ein Vidikon oder ein Charge Injection Device (CID) verwendet.

Mit dem erfindungsgemäßen Verfahren ist es möglich, Entfernungsbilder hoher Ortsauflösung in Fernsehnorm (50 resp. 60 Bilder/s) auf zu nehmen und darzustellen, so daß sich für ein derartiges Gerät eine breite Anwendungspalette von Handhabungssystemen bis zu 3-d Fernsehen ergibt.

Die Erfindung wird anhand zweier Figuren näher erläutert. Es zeigen:

Fig. 1    das Blockschaltbild einer Vorrichtung, mit der das erfindungsgemäße Verfahren durchführbar ist,

Fig. 2    ein Beispiel für den zeitlichen Verlauf dreier Transparenzfunktionen.

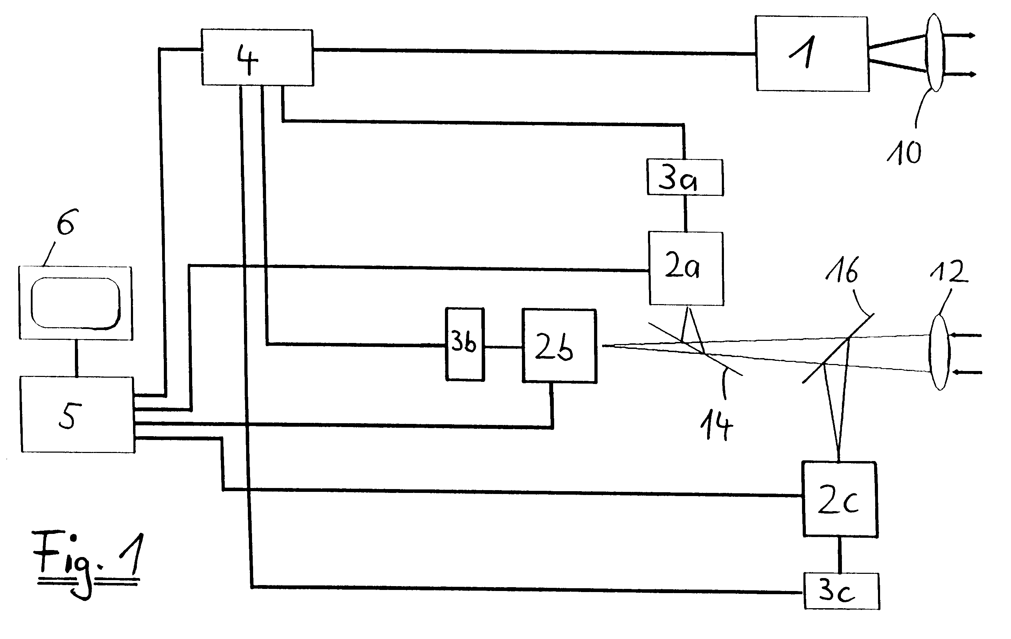

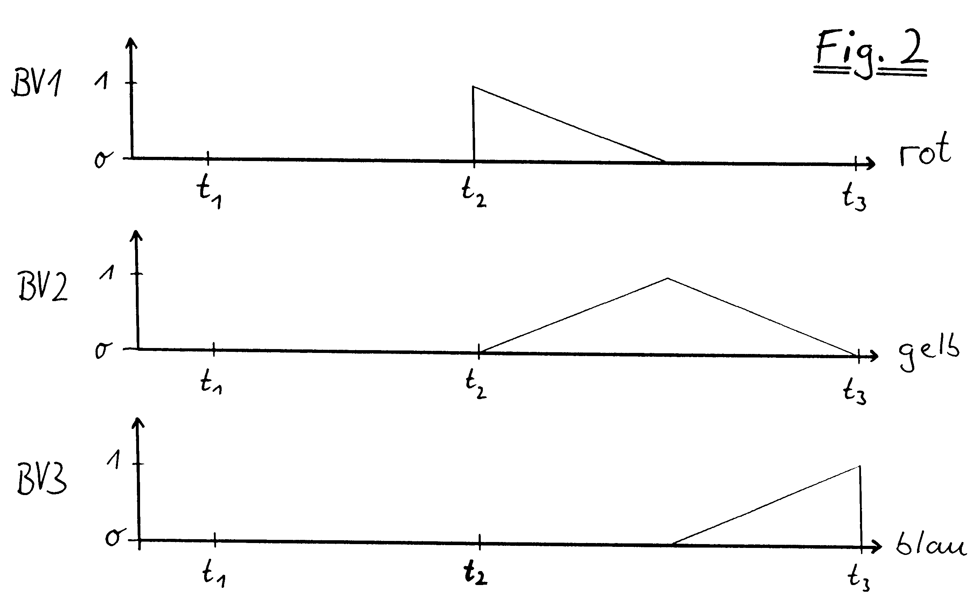

Fig. 1 zeigt das Blockschaltbild einer Vorrichtung mit drei Empfangsvorrichtungen **2a, 2b, 2c** - (z.B. Restlichtkameras), mit der gleichzeitig drei modulierte Reflexionsbilder erzeugt werden. Gesteuert vom Zeitcodegenerator **4** sendet die Beleuchtungseinrichtung **1**, bevorzugt ein Laser, zu einem bestimmten Zeitpunkt $t_1$ (siehe Fig. 2) einen Lichtpuls aus. Der vom abzubildenden Objekt reflektierte Lichtpuls wird über eine optisches Strahlteilersystem z.B. aus mehreren teildurchlässigen Spiegeln **14, 16** zu den Empfangsvorrichtungen **2a, 2b, 2c** geführt. Um eine gleichmäßige Aufteilung auf die drei Empfangsvorrichtungen zu erreichen, ist der erste Strahlteiler **16** hier so ausgelegt, daß etwa 1/3 des einfallenden Lichts reflektiert wird, 2/3 durchgelassen werden, während der nachfolgende Strahlteiler **14** ein halbdurchlässiger Spiegel ist. Entsprechend dem abzubildenden Entfernungsbereich werden zu einem späteren Zeitpunkt $t_2$ bis zu einem Zeitpunkt $t_3$ (Öffnen bzw. Schließen der Verschlüsse) die Bildverstärker mit integrierter Bildaufnahmeeinheit (bevorzugt eine CCD-Aufnahmematrix) innerhalb der Empfangsvorrichtungen **2a, 2b, 2c** durch die Steuereinheiten **3a, 3b, 3c** angesteuert, und zwar derart, daß deren Verstärkung durch frei programmierbare zeitabhängige Funktionen (Transparenzfunktionen) z.B. gemäß den in Abb. 2 gezeigten, von Null ausgehend verändert werden. Nach dem Zeitpunkt $t_3$ liegen die derart modulierten Reflexionsbilder des abzubildenden Bereichs in den Bildaufnahmeeinheiten der Kameras **2a, 2b, 2c** vor. Eine Mischstufe **6** (z.B. ein Video-Composer) synchronisiert den Auslesevorgang der Bildaufnahmeeinheiten abhängig von den vorgegebenen Signalen des Zeitcodegenerators **4,** ordnet jedem der 3 Kanäle einen Farbwert, z.B. die drei Grundfarben rot, gelb, blau zu und mischt diese eingefärbten Bilder, so daß ein Farbbild aus den resultierenden Mischfarben entsteht. Die zusätzliche Einheit **5** enthält einen Bildpunktspeicher, so daß eine digitale Bildverarbeitungsschnittstelle ermöglicht wird.

Die Verfahrensweise wird nun anhand eines konkreten Beispiel erläutert. Dazu sind in Fig. 2 beispielhaft die zeitlichen Verläufe der auf eins normierten Verstärkungsfaktoren an den drei Bildverstärkern **BV1, BV2, BV3** dargestellt (Transparenzfunktionen). Hierbei bedeutet eine Verstärkung Null, daß keine reflektierte Energie an der nachfolgenden Bildaufnahmeeinheit ankommen kann. Jedem der drei Bildverstärker ist eine der Grundfarben rot, gelb oder blau zugeordnet.

Abgebildet werden soll ein Bereich von 50 m Tiefe, beginnend in 50 m Entfernung vom Sensor. Darin befinden sich drei Objekte, z.B. drei Bäume in ca. 50-55m, 75-80m bzw. 95-100m Entfernung.

Zur Zeit $t_1$ = 0 wird ein Lichtpuls ausgesandt. Um den abzubildenden Bereich einzustellen, ist der Zeitpunkt $t_2$, ab dem die Verstärkungsfaktoren von Null aus erhöht werden (Öffnen der Verschlüsse) so zu bemessen, daß er der doppelten Laufzeit des Lichtsignals vom Sensor zum nächsten Punkt des abzubildenden Bereichs entspricht, und der Zeitpunkt $t_3$, ab dem sämtliche Verstärkungsfaktoren wieder gleich Null sind (Schließen der Verschlüsse) so zu bemessen, daß er der doppelten Laufzeit des Lichtpulses vom Sensor zum entferntesten Punkt des abzubildenden Bereichs entspricht. Der Lichtpuls legt in einer Nanosekunde 0,30 m zurück, so daß $t_2$ ungefähr 333 nsec, $t_3$ ungefähr 667 nsec entsprechen. Das Licht, das den ersten Baum trifft, erreicht den Empfänger somit nach 333 bis 367 nsec. Zu dieser Zeit ist die Verstärkung des roten Kanals etwa 1, die des gelben und blauen Kanals jeweils etwa Null. Das Bild des Baums wird im Mischbild rot/orange abgebildet. Bei dem zweiten Objekt in etwa 75 m Entfernung, dessen Reflexionssignal zum Zeitpunkt $(t_3 -t_2)/2$ empfangen wird, überwiegt die Farbe gelb und beim weitest entfernten Objekt (empfangen zum Zeitpunkt $t_3$) die Farbe blau. Objekte, die sich zwischen diesen drei beispielhaften Objekten befinden, werden durch entsprechende Mischfarben dargestellt. Die zeitabhängigen Verstärkungsfaktoren der einzelnen Kanäle werden vorteilhaft so gewählt, daß die Summe der Einzelverstärkungen zu jedem Zeitpunkt t innerhalb der Belichtungszeit $\Delta t = t_3 - t_2$ denselben Wert besitzt. So wird erreicht, daß die Helligkeit der reflektierten Signale in der Summe konstant ist, so daß ein Mischbild entsteht, dessen Farbe der Entfernung entspricht und das den Kontrast der Szene als Grauwert enthält. Alternativ zu den in Fig. 2 dargestellten Funktionen können auch andere Funktionen gewählt werden, die dieser Bedingung genügen.

Die Transparenzfunktionen verlaufen im wesentlichen kontinuierlich, worunter hier zu verstehen ist, daß die Transparenzfunktionen sich bis auf eine eventuelle, jedoch endliche Anzahl von sprunghaften Änderungen, stetig ändern. Dabei können alle Werte zwischen 0 und 1, das heißt zwischen völliger Undurchlässigkeit und völliger Durchlässigkeit angenommen werden. In der Regel werden zu jedem Zeitpunkt t innerhalb der Verschlußöffnungszeit mit $t_2 < t < t_3$ zumindest zwei der Transparenzfunktionen einen Zwischenwert zwischen 0 und 1 aufweisen. Das schließt nicht aus, daß , wie z.B., in Fig. 3 bei $t_2$, $(t_3 - t_2)/2$ und $t_3$ zu einzelnen Zeitpunkten jeweils nur eine reine Farbe vorliegt. Wesentlich ist, daß zu jedem Zeitpunkt eine unterschiedliche Kombination der Momentanwerte der Transparenzfunktionen vorliegt, um eine eindeutige Zuordnung zwischen Entfernung und Farbwert zu erhalten. Sprunghafte Veränderungen ergeben sich z.B. beim Öffnen der Verschlüsse, (Zeitpunkt $t_2$), wenn die Werte der Transparenzfunktionen von Null auf ihren jeweiligen Ausgangswert gesetzt werden und entsprechend bei Schließen der Verschlüsse (Zeitpunkt $t_3$), wenn die Transparenzfunktionen von ihrem Endwert auf Null zurückgesetzt werden.

Vorteilhaft kann die Summe der Momentanwerte der Transparenzfunktionen proportional zu $1/R^2$ gewählt werden, wobei $R$ der mittlere Abstand des abzubildenden Bereichs von der Kamera ist. Dadurch können die Helligkeitsunterschiede, die durch die entfernungsabhängige Lichtstärke bei der Beleuchtung entstehen, kompensiert werden.

Um die Empfindlichkeit zu erhöhen, sind Mehrfachbelichtungen der Bildaufnahmeeinheiten möglich. Sowohl die Beleuchtungsquelle als auch die Bildverstärker können so ausgelegt werden, daß selbst bei 1/30 bzw. 1/25 sec Belichtungszeit $\Delta$ t = $t_3$ - $t_2$ mehrere tausend Einzelbelichtungen durchgeführt werden können.

**Patentansprüche**

1. Verfahren zur Erzeugung von Entfernungsbildern nach dem Prinzip Aussenden eines Lichtpulses und synchronisierter, zeitverzögerter Empfang des reflektierten Lichtpulses auf einer Bildaufnahmeeinheit mit vorgeschalteter Verschlußeinrichtung, **dadurch gekennzeichnet**, daß
   - während des Empfangs eines reflektierten Lichtpulses die Transparenz der Verschlußeinrichtung eine vorgegebene zeitabhängige, im wesentlichen kontinuierliche Funktion durchläuft und in dieser Weise mindestens zwei solche modulierte Reflexionsbilder jeweils des abzubildenden Entfernungsbereichs jedoch unter Anwendung unterschiedlicher Transparenzfunktionen erzeugt werden
   - jedem dieser modulierten Reflexionsbilder eine Farbe zugeordnet wird

   - die eingefärbten modulierten Reflexionsbilder zu einem falschfarbkodierten Bild überlagert werden, so daß die Entfernung eines abgebildeten Objekts durch einen Farbwert und dessen Reflektivität durch einen Helligkeitswert wiedergegeben wird.

2. Verfahren nach Anspruch 1, **dadurch gekennzeichnet**, daß die modulierten Reflexionsbilder zeitlich parallel unter Aussenden nur eines Lichtpulses erzeugt werden.

3. Verfahren nach Anspruch 1, **dadurch gekennzeichnet**, daß die modulierten Reflexionsbilder sequentiell unter Aussenden mehrerer

4. Verfahren nach einem der vorangehenden Ansprüche, **dadurch gekennzeichnet**, daß die Summe der Transparenzfunktionen zeitunabhängig ist.

5. Verfahren nach einem der vorangehenden Ansprüche, **dadurch gekennzeichnet**, daß den Transparenzfunktionen der Faktor $1/R^2$ multiplikativ überlagert ist, wobei $R$ der mittlere Objektabstand ist.

6. Verfahren nach einem der vorangehenden Ansprüche, **dadurch gekennzeichnet**, daß zur Verbesserung des Signal-Rauschverhaltens auf derselben Bildaufnahmeeinheit mehrere modulierte Reflexionsbilder, aufgenommen bei gleicher Transparenzfunktion, überlagert werden.

7. Vorrichtung zur Durchführung des Verfahrens nach einem der Ansprüche 1,2,4,5,6 mit
   - einer Vorrichtung (**1**) zum Aussenden von Lichtpulsen
   - mehreren Empfangsvorrichtungen (**2a, 2b, 2c**) zum Empfang des reflektierten Lichtpulses, mit jeweils einer Bildaufnahmeeinheit und einem als Verschlußeinrichtung wirkendem vorgeschaltetem Bildverstärker, dessen zeitabhängige Verstärkung durch eine Steuereinheit (**3a, 3b, 3c**) gemäß der gewünschten Transparenzfunktion geregelt wird
   - einem Zeitcodegenerator (**4**), der die Verstärkung der Bildverstärker mit dem Aussenden der Lichtpulse synchronisiert
   - einer Mischstufe (**6**), die dem Bildinhalt jeder Bildaufnahmeeinheit eine Farbe zuordnet und sie zu dem falschfarbkodierten Bild überlagert.

8. Vorrichtung zur Durchführung des Verfahrens nach einem der Ansprüche 1, 3, 4, 5, 6 mit

- einer Vorrichtung zum Aussenden von Lichtpulsen
- einer Empfangsvorrichtung zum Empfang des reflektierten Lichtpulses, mit einer Bildaufnahmeeinheit und einem als Verschlußeinrichtung wirkendem vorgeschaltetem Bildverstärker, dessen zeitabhängige Verstärkung durch eine Steuereinheit gemäß der gewünschten Transparenzfunktion geregelt wird
- einem Zeitcodegenerator, der die Verstärkung des Bildverstärkers mit dem Aussenden der Lichtpulse synchronisiert
- einer Bildspeichereinheit, in dem der Bildinhalt mehrerer Bildaufnahmeeinheiten zwischengespeichert wird
- einer Mischstufe, die den gespeicherten Bildinhalten der Bildaufnahmeeinheiten jeweils eine Farbe zuordnet und sie zu dem falschfarbkodierten Bild überlagert.

Fig. 1

Fig. 2

BV1

rot

BV2

gelb

BV3

blau

EP 0 531 722 A2